Europäisches Patentamt

European Patent Office

Office européen des brevets

(11) Veröffentlichungsnummer: **0 140 310 B1**

# (12) EUROPÄISCHE PATENTSCHRIFT

(45) Veröffentlichungstag der Patentschrift: **23.09.92**

(21) Anmeldenummer: **84112653.5**

(22) Anmeldetag: **19.10.84**

Die Akte enthält technische Angaben, die nach dem Eingang der Anmeldung eingereicht wurden und die nicht in dieser Patentschrift enthalten sind.

(51) Int. Cl.⁵: **B03D 1/02**, B03D 1/14, C02F 1/24, B01D 17/035

(54) **Verfahren und Vorrichtung zum Trennen der Bestandteile von emulsionshaltigen Abwässern mittels Rührwerksflotation.**

(30) Priorität: **20.10.83 DE 3338171**

(43) Veröffentlichungstag der Anmeldung:
**08.05.85 Patentblatt 85/19**

(45) Bekanntmachung des Hinweises auf die Patenterteilung:
**23.09.92 Patentblatt 92/39**

(84) Benannte Vertragsstaaten:
**AT BE CH DE FR GB IT LI LU NL SE**

(56) Entgegenhaltungen:
DE-A- 2 843 950      DE-B- 1 017 553
LU-A- 53 878          US-A- 2 446 655
US-A- 2 711 823       US-A- 3 506 120
US-A- 4 193 869       US-A- 4 265 739

CHEMIE-INGENIEUR-TECHNIK, 44. Jahrgang, Nr. 5, März 1972, Seiten 341-347, Weinheim, DE; W. SIMMLER et al.: "Reinigung tensidhaltiger Abwässer durch Schaumtrennung"

ERDOEL-ERDGAS-ZEITSCHRIFT, 99. Jahrgang, März 1983, Seiten 82-89; G. HESCHL et al.: "Arbeitsweise und erste Ergebnisse der WEMCO-Anlagen zur Klärung von Einpresswässern in Erdölfeldern"

(73) Patentinhaber: **YSTRAL GmbH
Wettelbrunner Strasse 7
W-7801 Ballrechten-Dottingen(DE)**

(72) Erfinder: **Seeger, Hanspeter
Sulzbachstrasse 13
W-7801 Dottingen(DE)**

(74) Vertreter: **Melzer, Wolfgang, Dipl.-Ing. et al
Patentanwälte Dipl.-Ing. H. Mitscherlich
Dipl.-Ing. K. Gunschmann Dipl.-Ing.
Dr.rer.nat. W. Körber Dipl.-Ing. J. Schmidt-
Evers Dipl.-Ing. W. Melzer Steinsdorfstrasse
10
W-8000 München 22(DE)**

EP 0 140 310 B1

## Beschreibung

Die Reinigung von industriellen Abwässern aller Art gewinnt zunehmende Bedeutung. Bevor Industrieabwässer üblichen Kläranlagen zugeführt werden können, ist es daher erforderlich, durch letztere nicht klärbare Schadstoffe aus den Abwässern zu entfernen. Abwässer von Industriebetrieben, Raffinerien und auch von Schlachthöfen oder dergl. müssen daher aufbereitet werden, d.h. von solchen Stoffen befreit werden, die durch herkömmliche Kläranlagen nicht mehr geklärt werden können. Dabei sollen die anfallenden Schadstoffe derart aufbereitet anfallen, daß deren Weiterbehandlung, sei es endgültige Lagerung, sei es Weiterverarbeitung für andere Zwecke möglich ist. Ein solches Verfahren stellt die Rührwerksflotation dar.

Ein Verfahren der eingangs angegebenen Art ist in der Fachzeitschrift "Chemie-Ingenieur-Technik", 44. Jahrgang, Nr. 5, März 1972, S. 341-347, beschrieben. Dieses bekannte Verfahren eignet sich nur zur Behandlung von tensid-haltigen Abwässern, wobei zur Behandlung von nicht tensidhaltigem Abwasser Tenside hinzugegeben werden, um die Schaumbildung zu gewährleisten. Bei diesem bekannten Verfahren wird das Gas mittels einer Strahldüse in dem Abwasser verteilt, wobei Blasendurchmesser kleiner als 0,1 mm erreicht werden.

Aus der Erdöl-Erdgas-Zeitschrift, 99 (März 1983), S. 82-89, ist ein Verfahren und eine dazu geeignete Vorrichtung zur Behandlung von erdölhaltigen Abwässern bekannt. Bei diesem Verfahren wird die Emulsion von Einpreßwasser von Erdölfeldern zunächst in ihrer Zusammensetzung erfaßt, werden ggfls. bereits vorhandene Feststoffe ausgefällt und können Chemikalien zugesetzt werden, die bereits eine Flockung oder Sedimentation hervorrufen. Das derart konditionierte Einpreßwasser wird dann einer Flotationsvorrichtung zugeführt, die im wesentlichen aus einem länglichen Trog besteht, in dem mehrere Begasungseinrichtungen angeordnet sind. JedeBegasungseinrichtung saugt vom Boden des Troges das Einpreßwasser an und vermischt sie mit von oben zugeführtem Gas, beispielsweise Luft. Der Mischer zerteilt das Gas in kleine Bläschen und mischt diese in die Flüssigkeit ein. Eine Mischerhaube oberhalb des Mischers umgibt dessen Rotor und zwingt das Zweiphasengemisch aus dem Gas und dem Einpreßwasser durch Öffnungen. Dabei können vielleicht Scherturbulenzen auftreten, die ein mechanisches Aufbrechen der Emulsion verursachen, jedoch werden relativ große Gasblasen erzeugt. An den Gasblasen lagern sich die abzutrennenden Stoffe der Emulsion an und werden mittels der Gasblasen zur Oberfläche in dem Behälter geführt,wodurch dort eine Schaumphase entsteht. Dies wird mit Flotieren bezeichnet, wobei am Schaum das sog. Flotat angelagert ist. Die Schaumphase wird seitlich mittels Abräumvorrichtungen, bei denen es sich um paddelähnliche rotierende Einrichtungen handelt,in seitliche Schaumbehälter abgeschöpft. Dort kann der die abzutrennenden Stoffe aufweisende Schaum weiterverarbeitet oder zur Weiterverarbeitung bereitgehalten werden.

Sehr kritisch sind bei solchen Emulsionen bzw. Suspensionen beispielsweise schwankende Zusammensetzung des zugeführten Abwassers bzw. der Suspension. Insbesondere bei sich häufig ändernder Zusammensetzung wie das bei Entsorgungsunternehmen vorkommt, gibt es bei der Durchführung des Verfahrens erhebliche Schwierigkeiten insbesondere in zeitlicher Hinsicht, da eine kontinuierliche Bearbeitung unmöglich ist. Bei anderen Abwässern wie beispielsweise von Schlachthöfen oder Lebensmittelbetrieben, werden auch Schadstoffe flotiert, die zumindest bei Erwärmung eine erhebliche Geruchsbeeinträchtigung verursachen. Ein weiterer wesentlicher Nachteil bei den herkömmlichen Verfahren und Vorrichtungen stellt die Tatsache dar, daß Schäume äußerst schwierig zu behandeln sind, weshalb häufig Stabilisatoren zugemischt werden müssen, damit die Schäume stabil werden. Jedoch ist auf jeden Fall sorgfältige Handhabung erforderlich. Wenn nämlich die Handhabung nicht sorgfältig genug erfolgt, kann eine Reemulgierung auftreten, wobei sich gezeigt hat, daß reemulgierte Emulsionen wesentlich schlechter aufzubrechen sind, als die ursprüngliche Emulsion. Eine solche Reemulsion kann auch auftreten, wenn nicht gelöste oder nicht emulgierte Teilchen in den Bereich des Behälters kommen, in dem die Turbulenz zum mechanischen Auftrennen erzeugt wird. Dort liegen nämlich in stabile aufgebrochene Emulsionen vor.

Bei dem zuletzt beschriebenem bekannten Verfahren ist weiter von Nachteil, daß das Einpreßwasser die Bodenzone des Behälters durchläuft und dabei von einer Bodenzone zur nächsten strömen kann. Bei dem Durchlauf kann in einer Zone bereits vorgereinigtes Einpreßwasser in eine nächste Bodenzone gelangen und diese laufend von neuem verunreinigen. Ferner wandern die Luftblasen nicht vertikal sondern aufgrund der Strömung in dem gesamten Trog weiter und brauchen erheblich längere Zeit, bis sie zur Oberfläche auftauchen. Es hat sich jedoch gezeigt, daß es nicht auf eine möglichst lange Verweilzeit ankommt, sondern vielmehr auf die Anzahl der Luftblasen. Diese kann jedoch nur dann hoch eingestellt werden, wenn dieBlasen mit hoher Geschwindigkeit durch die Emulsion bzw. Suspension wandern und dadurch neuen Blasen schnell Platz machen.

In der US-A-2,711,823 sind ein Verfahren zum Flotieren von Erz aus einer Pulpe und eine dazu geeignete Vorrichtung zu entnehmen. Die Flotation wird durch einen um eine vertikale Achse rotierenden Flügelrotor erreicht, der die Pulpe und von oben entlang der Welle des Flügelrotors zugeführte Luft radial austreibt. Der Flügelrotor ist in seiner Drehebene von ortsfesten vertikalen Mischstäben umgeben.

Bei einem aus der DE-B-10 17 553 entnehmbaren Verfahren und eine Vorrichtung Zur Flotation von Mineralien wird die die Mineralien enthaltende Trübe von oben koaxial im Zwischenraum zwischen einer vertikalen Welle eines Rotationskörpers und einem die Welle im radialen Abstand umgebenden Statorrohr eingeführt und im oberen Bereich des vorhandenen Behälters mittels einer ersten Verteilungsvorrichtung verteilt. Eine weitere Verteilung erfolgt mittels des Rotationskörpers, der Öffnungen aufweist, aus denen Luft in Form feiner Bläschen in die Trübe austritt. Die Luftbläschen sollen im Gegenstrom zur Trübe aufsteigen.

Aufgrund dieses Standes der Technik ist die Fachwelt der Ansicht, daß zwar Rührwerkflotation zum Aufbrechen von Emulsionen geeignet ist, daß jedoch bei Vorliegen schwer auftrennbarer Emulsionen bzw. leicht reemulgierbarer Emulsionen der Zusatz emulsionsaufbrechender Chemikalien unabdingbar notwendig ist.

Der Erfindung liegt die Aufgabe zugrunde, ein Verfahren und eine Vorrichtung der im Oberbegriff des Anspruchs 1 bzw. 5 genannten Arten so weiterzubilden, daß auch schwer aufbrechbare Emulsionen oder leicht reemulgierbare Emulsionen dine Zusatz von emulsionsaufbrechenden Chemikalien sicher aufgetrennt werden können.

Diese Aufgabe wird durch die Merkmale der Ansprüche 1 bzw. 5 gelöst. Die Erfindung ist durch die Merkmale der Unteransprüche weitergebildet.

Wesentlich ist, daß zum einen das Gas sehr fein gemischt wird, und zwar unmittelbar dort, wo die Emulsion im Abwasser mechanisch aufgebrochen wird. Ferner ist wesentlich, daß die Abwasserzufuhr nahe der Oberfläche des Abwassers im Behälter erfolgt und die Abfuhr der Restphase am Unterende des Behälters erfolgt, derart, daß die Gasblasen vertikal, d.h. auf kürzestem Wege durch das emulsionhaltige Abwasser treten. Bei einem kontinuierlichen Verfahren, bei dem das emulsionhaltige Abwasser nacheinander in Reihe angeordnete Behälter mit im wesentlichen gleicher Ausbildung durchläuft, strömen die Gasblasen und das Abwasser im Gegenstrom, wodurch sämtliche nicht gelöste bzw. emulgierte Partikel abflotiert werden, bevor sie in die Turbulenzzone des Behälters gelangen, wodurch der Emulsionstrennvorgang in der Turbulenzzone des Behälters nicht gestört werden kann. Jedoch ist auch ein chargenweiser Betrieb mit entsprechender Verweildauer möglich. Dabei ist von weiterem Vorteil, daß in den verschiedenen Behältern bezüglich unterschiedlicher Bestandteile der Emulsion im Abwasser flotiert werden kann. Bekanntlich wird der Flotationsvorgang durch den zu flotierenden Stoffen angepaßte Flotations-Chemikalien unterstützt. Den verschiedenen Behältern Können daher unterschiedliche Flotations-Chemikalien zugeführt werden. Ferner können auch unterschiedliche Gase zugeführt werden, falls sonst chemische Reaktionen befürchtet werden müssen. Ferner können auch Flockungs-Chemikalien in den Behältern zugeführt werden.

Ein weiteres wesentliches Merkmal der Erfindung besteht darin, daß die Behälter für sich geschlossen ausgebildet werden können, wodurch der sich aud der Oberfläche des emulsion haltigen Abwassers Schaum durch die nachdrängenden Gasblasen über eine Leitung aus dem Behälter herausgeführt werden kann, ohne in mechanischer Weise auf den Schaum Einfluß nehmen zu müssen, wodurch eine Reemulgierung ausgelöst werden könnte. Der abgeführte Schaum bzw. das abgeführte Flotat kann dann beispielsweise in einer Zentrifuge oder dergleichen in Feststoffe, Abgas und gegebenenfalls mitgerissenes Restwasser aufgetrennt werden. Der Feststoff kann dann in üblicher Weise weiterverarbeitet und aufbereitet werden. Je nach Abwasserart erfolgt die Weiterverarbeitung bzw. Aufbereitung zum Zwecke späterer Verbrennung, späterer Endlagerung als Sondermüll oder auch zur späteren Verfütterung usw. Das Abgas aus der Flotation kann je nach Zusammensetzung direkt an die Atmosphäre abgegeben werden. Enthält das Abgas jedoch Schadstoffe, so können diese in an sich üblicher Weise entfernt werden. Enthält das Abgas beispielsweise geruchsbeeinträchtigende Stoffe, wie chlorierte Kohlenwasserstoffe, so wird das Abgas zweckmäßig über einen geeigneten Filter wie einen Aktivkohle-Filter geführt. Das in der Trenneinrichtung abgeschiedene Restwasser wird, da es mit hoher Wahrscheinlichkeit Verunreinigungen aufweist, wieder zum Anfang des Verfahrens bzw. zum Eingang der Vorrichtung zurückgeführt, das heißt dem zuzuführenden Abwasser zugefügt.

Ein weiterer Vorteil des abgeschlossenen Behälters ist darin zu sehen, daß er fahrzeuggebunden verwendet werden kann, das heißt das erfindungsgemäße Verfahren kann auch auf Schiffen verwendet werden, auf dem eine offen arbeitende Vorrichtung ungeeignet ist, da bei Schwingungen des Schiffes oder Lageveränderungen der Abschöpfvorgang sofort gestört wird, wodurch die Vorrichtung nicht mehr funktionsfähig ist.

Es hat sich ferner gezeigt, daß durch Intensivbelüftung in mehreren Stufen ein sehr wesentlicher Abbau des BSB-5-Wertes sowie eine starke Sauerstoffanreicherung möglich ist, wodurch die Gefahren aufgrund toter Gewässer oder Einführung entsprechender Abwässer beseitigbar sind.

Die Erfindung wird anhand der in der Zeichnung dargestellten Ausführungsbeispiele näher erläutert. Es zeigen:

Figur 1 ein Fließschema des erfindungsgemäßen Verfahrens zum Trennen von emulsionhaltigen Abwässern;

Figur 2 schematisch und im Schnitt die wesentlichen Merkmale der erfindungsgemäßen Vorrichtung zum Trennen von emulsionhaltigen Abwässern;

Figur 3 schematisch und im Schnitt eine vorteilhafte Ausbildung einer Begasungseinrichtung der Vorrichtung;

Figur 4 den Schnitt IV-IV in Figur 3,

Figur 5 schematisch im Schnitt ein Beispiel einer Ausbildung einer Zentrifuge als Trenneinrichtung für das Flotat.

Im folgenden wird die Erfindung anhand einer Ausführungsform näher erläutert, bei der als Flüssigkeit Wasser und als Gas Luft verwendet wird, jedoch kann es sich auch um andere Gase und/oder Flüssigkeiten handeln, wobei die Art des Gases von der Art der Flüssigkeit und der in ihr emulgierten Stoffe abhängt.

Über eine Zulaufleitung 1 wird ein emulsionhaltiges Abwasser zunächst unbekannter Zusammensetzung zugeführt. Mit Hilfe an sich bekannter Meßeinrichtungen 2 werden die für das Verfahren wesentlichen Eigenschaften des Abwassers festgestellt und aufgezeichnet. Insbesondere wird die chemische Zusammensetzung der zugeführten Emulsion hinsichtlich der Flüssigkeit und der wesentlichen Stoffe festgestellt. Ferner werden beispielsweise der pH-Wert, die Temperatur und dergleichen erfaßt.

Abhängig von der nun bekannten Zusammensetzung der Emulsion kann diese bzw. das Abwasser in einem Konditionierscritt 3 konditioniert werden, das heißt, daß Chemikalien zugefügt werden können, die es ermöglichen, Stoffpartikelchen zu entfernen, beispielsweise durch Flockung, Fällung oder dergleichen. Das gegebenfalls derart konditionierte Abwasser wird nach Abschöpfung der ausgefällten oder geflockten Bestandteil einem Flotationsschritt 4 zugeführt, der weiter unten näher erläutert wird. Durch den Flotationsschritt 4 wird einerseits Reinwasser 5 erzeugt, das einer üblichen Kläreinrichtung zugeführt wird, falls dies beispielsweise aufgrund gesetzlicher Vorschriften, erforderlich ist. Ferner wird Flotat oder Schaum 7 erzeugt, der einem Trennschritt 8 zugeführt wird, beispielsweise einer Zentrifuge oder dergleichen wie das weiter unten näher erläutert wird. In dem Trennschritt 8 wird der Schaum 7 getrennt in Feststoff 9, Abgas 10 und gegebenenfalls in dem Schaum 7 noch enthaltenes Restwasser 11. Der Feststoff 9 wird einer an sich üblichen Weiterverarbeitung 12 wie einer Verbrennung, einer Endlagerung als Sondermüll, einer Verfütterung oder dergleichen, je nach Zusammensetzung des Feststoffes 9 zugeführt. Das Abgas 10 aus der Flotation wird je nach Zusammensetzung direkt oder über eine geeignete Filtereinrichtung 13 an die Atmosphäre abgegeben. Das Restwasser 11 wird, da es zumindest teilweise noch die eingangsseitige Emulsion enthält, wieder zur Zulaufleitung 1 zurückgeführt und erneut dem Verfahren unterworfen.

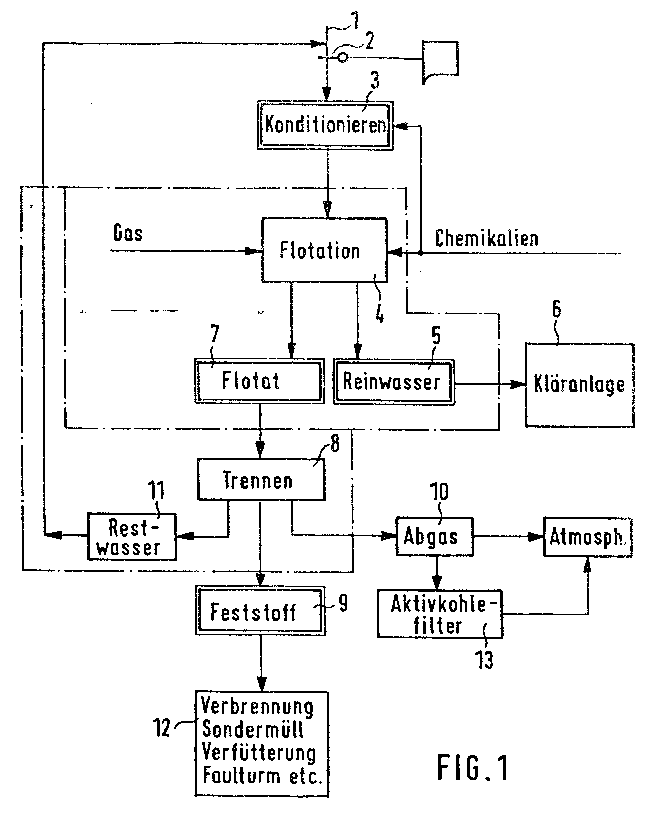

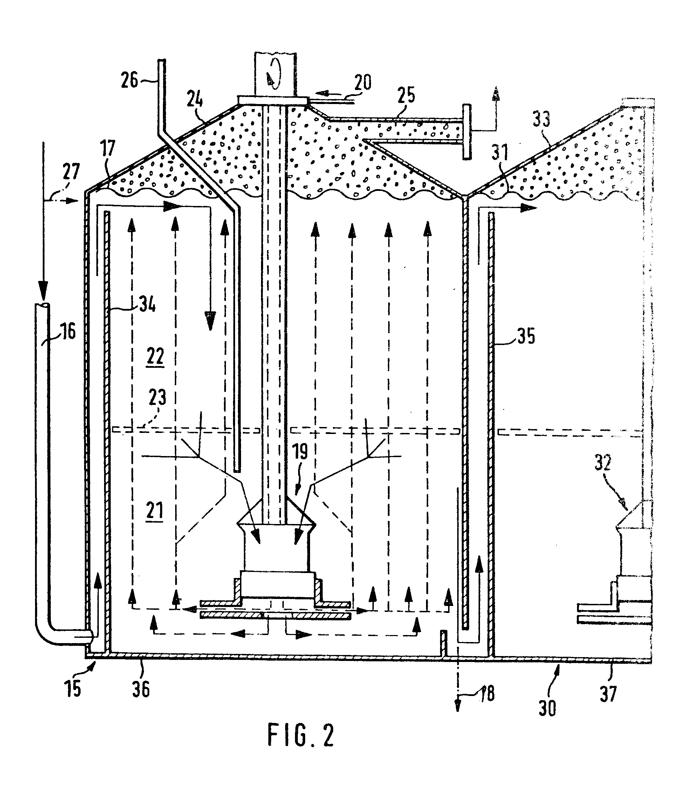

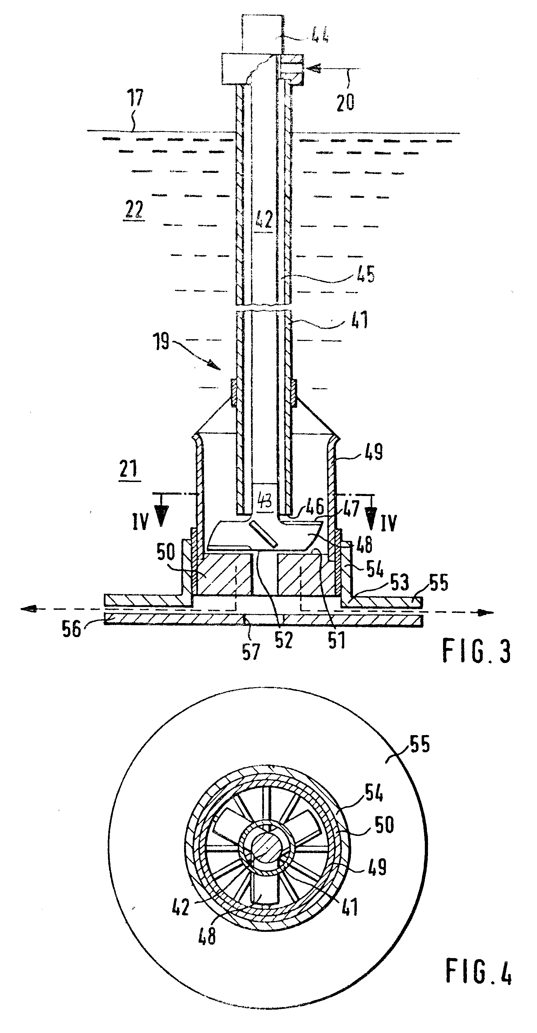

Figur 2 zeigt schematisch und im Schnitt einen ersten Behälter 15, der im Flotationsschritt 4 gemäß Figur 1 durchlaufen wird. Dem Behälter 15 wird das (konditionierte) Abwasser über eine Leitung 16 zugeführt. Diese mündet in den Behälter 15 derart, daß das Abwasser am Oberende des Behälters 15 nahe der Oberfläche 17 des Abwassers in dem Behälter (jedoch etwas unterhalb dieser) zugeführt wird. Auf der anderen Seite weist der Behälter 15 einen Austritt 28 auf, dem sich am Unterende des Behälters 15 befindet. Das Abwasser strömt daher gemäß den Volllinien- Pfeilen im wesentlichen vertikal von oben nach unten. Etwa mittig zwischen dem Eintritt zur Leitung 16 und dem Austritt 28 aus dem Behälter 15 ist in dem Behälter 15 eine Begasungseinrichtung 19 angeordnet, mittels der über eine Leitung 20 zugeführtes Gas in den unteren Bereich des Behälters 15 geführt werden kann und in fein verteilter Weise in die Emulsion im Behälter 15 eingemischt werden kann. Ferner ist die Begasungseinrichtung 19 so ausgebildet, daß eine Turbulenz im Abwasser bzw. in der Emulsion hervorgerufen wird, wobei ferner eine Einrichtung vorgesehen ist, mittels der aufgrund Prallkräften oder dergleichen ein mechanisches Aufbrechen der Emulsion unter gleichzeitigem Einmischen feinst verteilten Gases erreicht wird. Ein Ausführungsbeispiel einer hierzu geeigneten Begasungseinrichtung 19 wird weiter unten anhand der Figuren 3 und 4 näher erläutert werden. Wie durch Strichlinien dargestellt, steigen die aus der Begasungseinrichtung 19 austretenden Gasblasen kleinen Durchmessers im wesentlichen vertikal und damit im Gegenstrom zum emulsion haltigen Abwasser nach oben. Wie dargestellt tritt die Emulsion noch ungebrochen in die Begasungseinrichtung 19 ein und vermischt sich mit den feinen Gasblasen unter mechanischem Aufbrechen beim Austritt aus der Begasungseinrichtung 19. Es entsteht eine Gas/Flüssig-Suspension. In dem Behälter 15 können zwei deutliche Zonen unterschieden werden. Die beiden Zonen, nämlich die im unteren Bereich gebildete Turbulenz- und Begasungszone 21 und die weiter unten näher erläuterte im oberen Bereich gebildete Flotationszone 22 können zur besseren Trennung der beiden Zonen durch ein in Strichlinien dargestelltes Gitter 23 voneinander getrennt werden. In der Flotationszone 22 werden sämtliche Feststoffe an der Oberfläche der Gasblasen gebunden, insbesondere können Stoffe in der Flotationszone an die Oberfläche der Gasblasen gebunden werden, die sonst ein Reemulgieren in der Turbulenzzone verursachen könnten. Die Gasblasen gelangen unter Bildung eines Schaums 7 mit Flotat an die Oberfläche 17 des Abwassers im Behälter 15. Der Behälter 15 ist mittels eines hier etwa kegelstumpfförmig ausgebildeten Deckels 24 geschlossen, von dem eine Abführleitung 25 zu der Trennstufe 8 gemäß Figur 1 führt. Durch die stets nachdrängenden Gasblasen wird der Schaum 7 bzw. das Flotat aus dem Bereich zwischen Deckel 24 und Oberfläche 17 in die Leitung 25 und damit zur Trennstufe 8 zwangsweise bewegt. Ein mechanisches Abschöpfen oder dergleichen, was eine Zerstörung des empfindlichen Schaums zur Folge haben könnte und gegebenenfalls auch ein Reemulgieren verursachen könnte, ist dadurch wirksam vermieden.

Ferner ist in den Behälter 15 eine Chemikalienleitung 26 geführt, durch die gegebenefalls, Flockungs-und/oder Flotations-Chemikalien insbesondere in die Turbulenzzone 21 eingemischt werden können. Wie bereits erwähnt, können Flockungs-Chemikalien auch in der Konditionierstufe 3 zugeführt werden. Wie noch erläutert werden wird, kann die Zuführung von Flockungs-Chemikalien in die einzelnen Behälter Vorteile besitzen.

Die so ausgebildete Vorrichtung kann für Chargenbetrieb und für kontinuierlichen Betrieb verwendet werden, wobei spezielle Ausbildungen des Behälters selbst vorteilhaft für die eine oder andere Anwendung sein kann.

Bei einem Chargenbetrieb kann, wie das durch eine Strichpunktlinie 27 dargestellt ist, zweckmäßig die Rohrleitung 16 am Oberende des Behälters 15 münden. Ferner kann in gleicher Weise, wie das ebenfalls durch eine Strichpunktlinie 28 dargestellt ist, das im Chargenbetrieb gebildete Reinwasser (5 in Fig. 1) abgeführt werden, beispielsweise über eine Rohrleitung oder dergleichen. Im Chargenbetrieb verweilt das emulsion haltige Abwasser in dem Behälter 15 so lange, bis die Trennung der Emulsion beendet ist, was sich dadurch bemerkbar macht, daß an dem entstehenden Schaum die abzutrennenden Stoffe nicht mehr gebunden sind (beispielsweise ist der Schaum weiß und nicht mehr durch Schmutzstoffe verdunkelt). Gegebenenfalls könnte dann durch Einleitung eines anderen Gases und/oder anderer Chemikalien die Trennung des Abwassers dann bezüglich eines anderen Stoffes erfolgen. Ist die grundsätzliche Zusammensetzung des Abwassers bekannt und im wesentlichen gleichbleibend, so kann durch eine Programmsteuerung vollautomatisch das Abwasser bezüglich aller abzutrennenden Stoffe behandelt werden.

Figur 2 zeigt jedoch eine Vorrichtung für kontinuierliche Betriebsweise, bei der mehrere Behälter mit im wesentlichen gleichem Aufbau aneinandergereiht sind. Gemäß Figur 2 schließt sich an den ersten Behälter 15 ein zweiter Behälter 30 an, der im wesentlichen gleichen Aufbau besitzt, nämlich eine Zufuhr ders emulsion haltigen Abwassers nahe dem Oberende des zweiten Behälters 30, jedoch unterhalb der Oberfläche 31 des in dem zweiten Behälter 30 enthalten en Abwassers und eine entsprechende Abfuhr am Unterende auf der anderen Seite. Ferner enthält der zweite Behälter 30 ebenfalls eine Begasungseinrichtung 32 und einen Deckel 33 mit ebenfalls einer Schaumabführleitung. Der aus dem Bereich des Deckels 33 abgeführte Schaum kann dabei der gleichen oder auch einer anderen Trenneinrichtung zugeführt werden.

Die Verbindung zwischen den beiden Behältern 15 und 30 könnte durch Rohrleitungen erfolgen. Die dargestellte Ausbildung ermöglicht jedoch eine einfache Aneinanderreihung einer beliebigen Anzahl von Behältern. Dazu weist einer der Behälter an seinem Eingangs- oder Ausgangsende eine Schottwand 34 (1. Behälter 15) bzw. 35 (2. Behälter 30) auf. Bei der dargestellten Ausführungsform sind die Schottwände 34 bzw. 35 eingangsseitig vorgesehen, das heißt beginnen am Boden 36 bzw. 37 des jeweiligen Behälters 15 bzw. 30 und enden mit Abstand von der jeweiligen Oberfläche 17 bzw. 31 des in dem jeweiligen Behälter 15 bzw. 30 enthaltenen emulsion haltigen Abwassers. Das heißt, das dem Behälter 15 bzw. 30 zugeführte Abwasser fließt vor dem Eintritt in die Flotationszone 22 von unten nach oben zwischen der Außenwand und der jeweiligen Schottwand 34 bzw. 35. Dadurch ist eine elegante Strömungsführung der aus dem ersten Behälter 15 an dessen Unterende austretenden (teilgereinigten) Abwassers zum eingangsseitigen Oberende des zweiten Behälters 30 erreicht.

Sind alle Behälter 15, 30 ... der Vorrichtung im wesentlichen gleich aufgebaut, so wird die Zuführleitung 16 des Abwassers zum ersten Behälter an dessen Unterende derart angeschlossen, daß das zugeführte Abwasser erst zwischen der Außenwand und der Schottwand 34 nach oben zum Eintritt am Oberende der Flotationszone 22 unterhalb der Oberfläche 17 des Abwassers in den Behälter 15 strömt.

Wie bereits erwähnt ist es wesentlich, daß in der Turbulenzzone zum einen die Emulsion mechanisch gebrochen wird, und zum anderen gleichzeitig an gleicher Stelle das Gas bzw. die Luft äußerst fein verteilt eingemischt wird. Insbesondere sollen die gebildeten Bläschen außerordentlich klein sein, um große Gesamtoberflächen zu erzielen. Vorteilhaft ist der Durchmesser der Gasbläschen kleiner als 0,1 mm. Das heißt, in dem Bereich, in dem die Emulsion mechanisch gebrochen und gleichzeitig die Luftbläschen eingemischt werden, entsteht eine Art Nebel.

Anhand der Figuren 3 und 4 wird eine Ausführungsform einer solchen Begasungseinrichtung 19 näher erläutert, wobei Teile des Behälters 15 nicht dargestellt sind. Ferner ist eine Stützkonstruktion der Begasungseinrichtung 19, die auch durch den Deckel 24 gebildet sein kann, nicht dargestellt.

Die Begasungseinrichtung 19 weist ein Statorrohr 41 und eine dazu koaxiale Rotorwelle 42 auf. An dem Unterende der Rotorwelle 42 ist in an sich bekannter Weise ein Rotor 43 außerhalb des Statorrohrs 41 befestigt. Am anderen Ende der Rotorwelle 42 ist ein Antriebsmotor 44 oder eine andere Antriebseinrichtung angebracht, beispielsweise in an sich üblicher Weise angeflanscht. Die Gasleitung 20 mündet in dem Raum 45 zwischen der Rotorwelle 42 und dem Statorrohr 41. Das Unterende 46 des Statorrohrs 41 endet mit geringem Abstand über den oberen Scherkanten 47 der Flügel 48 des Rotors 43. Statorrohr 41 und Rotor 43 sind von einem hohlzylindrischen Stator 49 umgeben, wobei der Stator 49 entweder fest oder auch verschiebbar am Statorrohr 41 angebracht sein kann. Der Stator 49 trägt an seinem Unterende ein Dispergierelement 50, das (vergl. Figur 4) sternförmig ausgebildet ist und dessen Oberkanten 51 geringen Abstand zu den Unterkanten 52 der Flügel 48 des Rotors 43 besitzen. Dieser Abstand kann dadurch einstellbar sein, daß das Dispergierelement 50 bezüglich dem Stator 49 vertikal verschiebbar oder verstellbar ausgebildet ist. An dem Dispergierelement 50 ist ein Rohrflansch 53 über seinen Rohrabschnitt 54 befestigt. Mit Abstand zum Ringabschnitt 55 ist an diesem eine Platte 56 befestigt, die eine mittige Bohrung 57 aufweist. Rohrflansch 53 und Platte 56 bilden ein Strömungselement. Der Abstand zwischen dem Ringabschnitt 55 und der Platte 56 kann einstellbar sein. Deren Verbindung ist lediglich angedeutet, sie kann mittels Schraubbolzen oder dergleichen erfolgen. Die Begasungseinrichtung arbeitet in der folgenden Weise. Die Emulsion wird infolge Venturieffektes aufgrund des Ausströmens des Gases aus dem Raum 45 und der Rotation des Rotors 43 eingezogen und mit dem Gas unter feiner Zerstäubung des Gases an dem Dispergierelement 50 vermischt und mittels des Strömungselementes wieder abgegeben. Es wird also in dem Augenblick, in dem durch Scher- bzw. Prallkrafteinwirkung die Agglomeration der Emulsionströpfchen beginnt, feinstdisperse Luft gleichzeitig zugeführt, so daß das Agglomerat sofort mit dem Gas beladen wird und nach oben steigt.

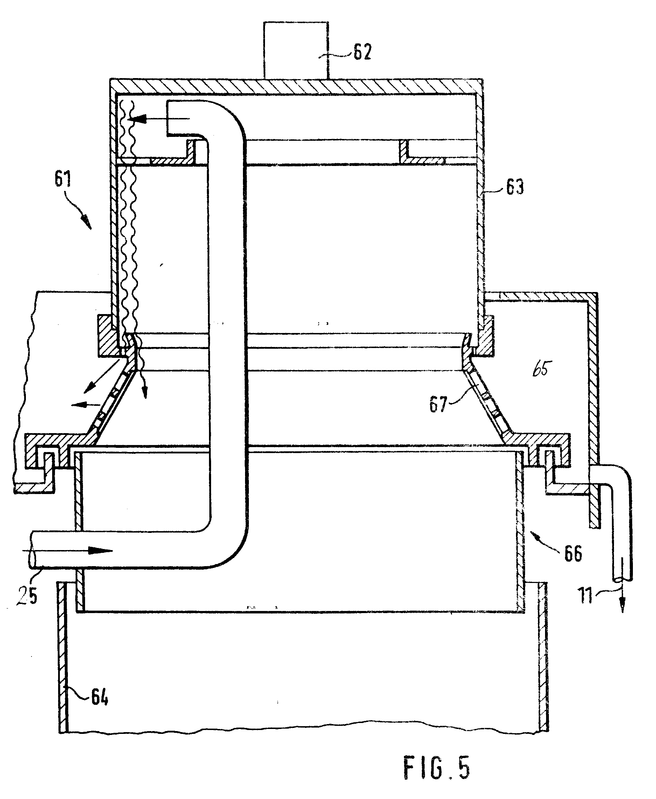

Figur 5 zeigt nun eine Ausführungsform einer Trenneinrichtung, nämlich einer Zentrifuge 61, mittels der der über die Leitung 25 zugeführte Schaum bzw. das Flotat aufgetrennt werden kann. Die Zentrifuge weist ein mittels eines Motors 62 in Drehung versetztes erstes Teil 63 auf, nahe deren oberem Ende die Leitung 15 endet. Flüssigkeit und Feststoffe trennen sich aufgrund Zentrifugalwirkung, wobei der Feststoff in einen Feststoffbehälter 64 abfällt. Die Flüssigkeit läuft in einen Sammelraum 65 und wird von dort als Restwasser (Figur 1) abgeführt. Der Feststoffbehälter 64 und der Sammelraum 65 befinden sich dabei im feststehenden Teil 66 der Zentrifuge 61. Oberhalb des Feststoffbehälters 64 ist ein Siebblech 67 vorgesehen, durch das Abgase, das heißt gasförmige Bestandteile des Schaums austreten, beispielsweise in den Sammelraum 65 eintreten können. Aus diesem werden die Abgase abgeführt. Handelt es sich um unschädliche Abgase, so können diese sogleich in die Atmosphäre abgegeben werden. Handelt es sich um agressive, umweltschädigende oder belästigende Abgase, so werden sie gesammelt und in an sich bekannter Weise verarbeitet. Beispielsweise können Geruchsbelästigungen verursachende chlorierte Kohlenwasserstoffe aufweisende Abgase über einen Aktivkohle-Filter geführt werden.

Zusammenfassend wird also über ein Zulaufrohr 16 ein emulsion haltiges Abwasser in einen Behälter 15 eingeführt, in den eine Begasungseinrichtung 19 eingebaut ist, mit dem drehzahlabhängig ein Gas sehr fein in die Emulsion eindispergiert wird. Gegebenenfalls in Verbindung mit entsprechenden Chemikalien, die über die Leitung 26 zugeführt werden können, wie Polymeren, Metallsalze, Natronlage usw., wird die Emulsion gebrochen durch Ausgleich der elektrischen Ladung sowie durch Einbringen von Scherkräften, die in der Lage sind, das durch elektrostatische Vorgänge oder chemische Vorgänge (Flockung) ausgelöste Öl zu koagulieren, sowie mit sehr kleinen Gasbläschen zu beaufschlagen, damit es an die Oberfläche 17 aufsteigen kann. Dieses Flotat bildet, ggf. zusammen mit entsprechenden Chemikalien wie Polymeren, einen Schaum 7, der durch das zugeführte Gas selbsttätig über die Leitung 25 ausgebracht und einer Trenneinrichtung zugeführt wird. Bei einer kontinuierlichen Betriebsweise mit mehreren hintereinander angeordneten Behältern 15, 30 ... arbeitet die Vorrichtung im Gegenstrom, das heißt, das emulsion haltige Abwasser wird von Behälter zu Behälter so geführt, daß es jeweils oben in den Behälter einläuft und unten aus ihm ausläuft. Aufgrund der Auftriebskräfte durch die Befrachtung mit dem Gas werden sämtliche Feststoffe nach oben getragen, wodurch die Verdichtung mit Feststoff mit zunehmender Höhe im Behälter ebenso zunimmt, wie am Boden des Behälters der geringste Feststoffgehalt (z. B. Ölgehalt) henscht. Im kontinuierlichen Betrieb wird nun laufend neues noch ungetrennte Emulsion Abwasser zugeführt, das noch freies Öl enthaltendes und frei flotierbare Feststoffe enthalten kann. Zunächst werden alle Teilchen, die nicht in gelöster oder emulgierter Form vorliegen, abflotiert. Dabei kann bei entsprechender Behandlung mit Chemikalien vor dem Einlauf in den Behälter die Emulsion bereits in gebrochenem Zustand in den Behälter zugeführt werden, wodurch die Flotation wesentlich beschleunigt wird, da lose Teilchen sofort zur Oberfläche 17 getragen werden und nicht mehr in die Turbulenzzone 21 gelangen können, wodurch eine Reemulgierung vermieden ist. Vielmehr gelangt dann nur noch die Emulsion in den Turbulenzbereich 21, die erst durch die Scherkräfte bzw. die Turbulenzkräfte gebrochen werden muß. Dabei handelt es sich im allgemeinen nur noch um sehr geringe Öl- bzw. Emulgatormengen, die nicht in der Lage sind, erneut zu emulgieren. Das Flotat wird durch das zugeführte Gas sofort ausgetragen so daß vom dem Flotat her keine neuen Stoffe eingezogen und/oder den nächsten Behälter zugeführt werden können. Somit erreicht die Begasungseinrichtung zunächst gleichzeitig das Einbringen des Gases zur Herstellung einer Gas/Flüssigkeits-Suspension sowie das Aufbringen von Scherkräften zum Trennen bzw. Aufbrechen der Emulsionsteile, die durch chemische oder elektrostatische Einwirkung allein nicht getrennt werden können. Ferner erreicht die Begasungseinrichtung eine vollständige Verteilung der ggf. zugeführten Chemikalien wie Polymere oder dergleichen, wenn diese nicht bereits im Einlauf der Emulsion zugeführt worden sind, sondern über die Leitung 26 direkt in die Turbulenzzone 21 eindosiert werden. Dabeikönnen wie erwähnt, in den verschiedenen Behältern, das heißt in verschiedenen aufeinanderfolgenden Kaskadenstufen, jeweils unterschiedliche Polymere oder andere Chemikalien zugesetzt werden, um so die Auftrennung eines andern Stoffes aus dem Abwasser zu bewirken. Die Menge und die Art der gegebenenfalls zugeführten Chemikalien richtet sich dabei nach der Zusammensetzung bzw. nach dem Aufbau der jeweiligen Emulsion, was eingangsseitig (Meßeinrichtungen 2) festgestellt wird. Danach richtet sich auch die Anzahl der zu verwendenden Behälter bei kontinuierlicher Betriebsweise. Beispielsweise sind für Lebensmittel vier Behälter ausreichend, für industrielle Waschwasser genügen zwei Behälter, bei mineralölhaltigen Abwässern sollten sechs Behälter verwendet werden.

Ein wesentlicher Vorteil der Erfindung besteht darin, daß Emulsionen unterschiedlichster Zusammensetzung gebrochen werden können und das dabei entstehende Flotat getrennt werden kann. Somit ist ein den gesetzlichen Bestimmungen entsprechender Ablauf des Reinwassers 5 möglich. Ferner können, wie erwähnt, bei vollkommen geschlossener Bauweise im Abgasstrom enthaltene Schadstoffe, wie beispielsweise chlorierte Kohlenwasserstoffe entfernt werden. Durch das Gegenstromprinzip wird das Verschleppen von Emulgatoren und Ölteilen sowie Feststoffen bei schwer zu trennenden Emulsionen von einem Behälter zu einem nächsten vermieden. Die Reinigungswirkung wird dadurch bei vergleichsweise kleiner Ausbildung der Gesamtanlage verbessert. Ferner werden die durch mechanische Abschöpfvorrichtungen und Austrageinrichtungen sich ergebenden Nachteile wirksam vermieden. Da das Restwasser eingangsseitig zugeführt werden kann, spielt auch die Trennschärfe der Gesamtanlage eine untergeordnete Rolle, da lediglich das Reinwasser abgeführt wird. Dadurch wird sichergestellt, daß keine Teilchen aus dem Flotat nach außen gelangen können. Dabei ist ferner von Vorteil, daß Füllstandsänderungen keine wesentliche Rolle spielen, wie dies bei Vorrichtungen mit Abschöpfung der Fall ist. Auch die Flotatkonzentration an der Flüssigkeitsoberfläche, die unter anderem von der Zusammensetzung der Emulsion und den ggf, zugeführten Chemikalien abhängt, ist nicht von wesentlicher Bedeutung, wie dies bei Abschöpfanlagen der Fall ist. Daraus folgt, daß die erfindungsgemäße Vorrichtung relativ unempfindlich gegenüber sich ändernden Emulsionen ist, also sehr anpassungsfähig ist. Auch bei hochbelasteten Emulsionen kann der Schaum mit dem Schmutz bzw. dem Flotat in gleicher Weise ausgetragen werden. Die Trennung erfolgt in der Trenneinrichtung. Gerade bei der Flotation sind jedoch die Schmutzpartikel deutlich leichter als sie umgebende Flüssigkeit, weshalb sie in dem sich drehenden Teil die innerste Schicht bilden, wodurch die Feststoffe sehr sicher abgetrennt werden können. Das rückfließende Restwasser kann dann bereits Chemikalien enthalten, wodurch sichergestellt werden kann, daß während der Flotation nicht verbrauchte und sich am Flotat bzw. im Restwasser niedergeschlagene Chemikalien wieder in den Kreislauf zurückgeführt werden. Dadurch kann einerseits der Chemikaliengehalt des Flotats reduziert werden und können andererseits im Gesamtverfahren Chemikalien eingespart werden. Dies ist insbesondere dann von Bedeutung, wenn die Feststoffe zu Futter- oder Düngemittel weiterverarbeitet werden sollen. Dies gilt insbesondere dann, wenn das Abwasser hohen Eiweißgehalt besitzt und die Flotierung ausschließlich mittels organischer Polymere erfolgt.

Bei der Ausführungsform mit geschlossenem Behälter ist eine völlig geruchsfreie Bearbeitung von Abwässern gewährleistet, insbesondere solcher von Schlachthöfen, Viehverwertungsbetrieben usw., das heißt von Abwässern, die sonst vor allem in der wärmeren Jahreszeit regelmäßig zu Geruchsproblemen für die Umgebung führen würden.

Die geschlossene Ausführung ist ferner besonders geeignet für die Anwendung auf Schiffen oder dergleichen Fahrzeugen, bei denen eine offen arbeitende Vorrichtung ungeeignet ist, da bei Schwingungen des Schiffes oder Lageveränderungen der Abschöpfvorgang des Schaumes gestört würde und somit die Vorrichtung nicht mehr betrieben werden könnte.

Die bei dem kontinuierlichen Verfahren in mehreren Stufen erreichte intensive Belüftung stellt einen wesentlichen Abbau des BSB-5 = wertes sowie eine erhebliche Sauerstoffanreicherung an sich toter Gewässer sicher. Im geschlossenen Verfahren können schädliche Gase wie chlorierte Wasserstoffe ausgetragen und ausgefiltert werden. Eine Filterung chlorierter Kohlenwasserstoffe hat den Vorteil, daß auch bei Störungen der Anlage der Aktivkohle-Filter unabhängig von der Führung des Flüssigkeitsstromes arbeiten kann. Würde der Aktivkohle-Filter im Flüssigkeitsstrom liegen, so wäre eine wesentlich häufigere Regenerierung erforderlich, da sonst viele feinste Feststoffe erfaßt würden, die den Aktivkohle-Filter zulegen.

Die Vorrichtung eignet sich für Kapazitäten von zwei m$^3$/h bis zu mehreren hundert m$^3$/h . Besondere Vorteile liegen auch in den geringen Betriebskosten sowie dem einfachen Aufbau der Vorrichtung, die jederzeit und in einfacher Weise überwacht und beeinflußt werden kann, insbesondere ohne weiteres an unterschiedliche Öl- bzw. Emulsionsgehalte anpaßbar ist;

**Patentansprüche**

1. Verfahren zum Trennen der Bestandteile von emulsionhaltigen Abwässern, wie ölhaltigen Abwässern oder Sondermüllabwässern, bei dem das einen Behälter (15,30) durchströmende und diesen am Unterende verlassende die Emulsion enthaltende Abwasser einer Rührwerksflotation unterworfen wird, bei der Gas zu einer Mischeinrichtung (19) geführt und mit letzterem möglichst feinblasig in das die Emulsion enthaltende Abwasser ausgetrieben wird und bei der flotierte Stoffe einen entfernbaren Schaum an der Oberfläche (17) des emulsionhaltigen Abwassers im Behälter (15,30) bilden, wobei Gasblasen mit einem Durchmesser von weniger als 0,1 mm verteilt werden,
   **gekennzeichnet** durch
   die Kombination folgender Verfahrensschritte;
   - das die Emulsion enthaltende Abwasser wird in den Behälter (15,30) nahe, aber unter der Oberfläche (17) des emulsionhaltigen Abwassers eingebracht,
   - das Gas wird mittels eines rotierenden Mischers (19) in dessen Reaktionszone im Behälter (15,30) eindispergiert und die so erzeugten Gasblasen werden fein verteilt,
   - gleichzeitig wird die Emulsion in der Reaktionszone des Mischers (19) und in der Turbulenzzone des Behälters (15, 30) aufgrund Prallkräften mechanisch aufgebrochen,
   - die mit der so abgetrennten Trennstoffphase der Emulsion geladenen Gasblasen steigen in eine über der Turbulenzzone liegende Flotationszone im Gegenstrom zum Strom des zugeführten, die Emulsion enthaltenden Abwassers zur Oberfläche (17) an und bilden dort einen Schaum,
   - der Schaum wird entfernt und weiterbehandelt,
   - der Rest des behandelten Abwassers wird am bodenseitigen Ende des Behälters (15,30) entnommen und ggfls. dieser Behandlung mehrfach unterworfen, bis eine trennstoffphasenfreie Flüssigkeit verbleibt.

2. Verfahren nach Anspruch 1,
   dadurch gekennzeichnet,
   daß das emulsionshaltige Abwasser den durch die Rotation eines Rotors (43) gegenüber einem zu diesem koaxial angeordneten, sternförmigen Dispergierelement (50) hervorgerufenen Prall- und Scherkräften ausgesetzt wird und das Gas in der Zone der höchsten Scherkräfte eindispergiert wird.

3. Verfahren nach Anspruch 1 oder 2,
   dadurch gekennzeichnet,
   daß bei einem kontinuierlichen Verfahren am Unterende des Behälters (15,30) der behandelte Rest des emulsionshaltigen Abwassers entnommen und einem in Strömungsrichtung nachfolgenden Behälter (30) nahe der Oberfläche (17) des emulsionshaltigen Abwassers in diesen zugeführt wird, wobei diesem ggf. ein anderes Gas und/oder andere Chemikalien zugeführt werden können.

4. Verfahren nach einem der Ansprüche 1 bis 3,
   dadurch **gekennzeichnet,**
   daß der Schaum (7) mittels des Gases aus dem allseits geschlossenen Behälter (15,30) über eine Leitung (25) einer Trenneinrichtung (61) zugeführt wird, und dort in Abgas und etwa enthaltene Feststoffe getrennt wird, wobei mitgeführte Restflüssigkeit wieder zum ungetrennten Abwasser zurückgeführt wird.

5. Vorrichtung Zur Durchführung des Verfahrens nach einem der Ansprüche 1 bis 4,

- mit einem Behälter (15,30), dem eingangsseitig ein zu trennendes emulsionhaltiges Abwasser zugeführt wird und dem ausgangsseitig der behandelte Rest des Abwassers oder die trennstoffphasenfreie Flüssigkeit entnommen wird,
- mit einer ein Rührwerk und eine Zuführungsleitung für Gas aufweisenden Begasungseinrichtung (19) im Behälter (15,30) Zum Austreiben feiner Gasblasen in die Emulsion.
- und mit einer Anordnung zum Entfernen des mit dem Flotat beladenen Schaumes von der Oberfläche (17) des emulsionhaltigen Abwassers,

wobei der Behälter (15) einen unterhalb und nahe der Oberfläche (17) des emulsionhaltigen Abwassers angeordneten Eingang (16,34) für das Abwasser und einen am unteren Ende des Behälters (15) angeordneten Ausgang für den Rest des Abwassers bzw. die Flüssigkeit aufweist,

wobei die Begasungseinrichtung (19) aufweist:

- ein Statorrohr (41),
- eine Rotorwelle (42) koaxial zum Statorrohr (41),
- einen Rotor (43) an einem Ende der Rotorwelle (42) außerhalb des Statorrohrs (41),
- einen Antrieb (Motor 44) am anderen Ende der Rotorwelle (42),
- eine Zuführleitung (20) zum Zuführen des Gases in den Raum (45) zwischen Rotorwelle (42) und Statorrohr (41),
- einen am Statorrohr (41) befestigten hohlzylindrischen Stator (49), der den Rotor (43) und das innere Ende des Statorrohres (41) umgibt,
- und ein mit dem Rotor (43) zwecks Beaufschlagung der Emulsion mit Scherkräften zusammenwirkendes Dispergierelement (50), wobei das Dispergierelement (50) sternförmig ausgebildet ist sowie unterhalb des Rotors (43) angeordnet ist und die Unterkanten (52) der Rotorblätter (48) mit den Oberkanten (51) des Dispergierelements (50) in einem geringen Abstand voneinander zusammenwirken.

6. Vorrichtung nach Anspruch 5,
dadurch **gekennzeichnet,**
daß der Stator (49) fest oder verschiebbar am Statorrohr (41) angebracht ist.

7. Vorrichtung nach Anspruch 5 oder 6,
dadurch **gekennzeichnet,**

daß das Dispergierelement (50) bezüglich dem Stator (49) vertikal verstellbar ist.

8. Vorrichtung nach einem der Ansprüche 5 bis 7,
dadurch **gekennzeichnet,**
daß der Eingang durch eine sich vom Boden des Behälters (15,30) aufwärts erstreckende Schottwand (34,35) gebildet ist, die nahe der Oberfläche (17,31) des emulsionhaltigen Abwassers im Behälter (15,30) endet.

9. Vorrichtung nach einem der Ansprüche 5 bis 8,
dadurch gekennzeichnet,
daß im Bereich des Dispergierelements (50) ein eine radiale Strömung des den Rotor (43) und das Dispergierelement (50) durchströmten Abwasser-Gas-Gemisches herbeiführendes Strömungselement angeordnet ist, bestehend aus einem flanschförmigen Ringteil (55) am Dispergierelement (50) und einer Platte (56) in einem Abstand unterhalb des Ringteils (55).

10. Vorrichtung nach Anspruch 9,
dadurch gekennzeichnet,
daß in der Platte (56) ein zentrales axiales Loch (57) angeordnet ist.

11. Vorrichtung nach einem der Ansprüche 5 bis 10,
gekennzeichnet durch
ein etwa horizontales Trenngitter (23) in dem Behälter (15) zwischen der Zone, in der die Begasungseinrichtung (19) Turbulenz erzeugt (Begasungs- und Turbulenzzone 21), und der darüber befindlichen im wesentlichen turbulenzfreien Zone, In der die Flotation erfolgt (Flotationszone 22).

12. Vorrichtung nach einem der Ansprüche 5 bis 11,
dadurch gekennzeichnet,
daß der Strom des emulsionhaltigen Abwassers nacheinander mehrere Behälter (15,30,....) kontinuierlich durchläuft, wobei das Unterende eines Behälters (15) mit dem Bereich nahe der Oberfläche (31) in dem nächstfolgenden Behälter (30) verbunden ist.

13. Vorrichtung nach Anspruch 12,
dadurch gekennzeichnet,
daß die mindestens zwei Behälter (15,30) aneinandergereiht sind und die aneinandergrenzenden Bereiche zwei etwa parallele Trennwände aufweisen deren eine vom Oberende bis nahe zum Unterende des ersten Behälters (15) und deren andere (35) vom Unterende bis nahe des Füllpegels (31) im zweiten Behälter (30) reicht.

14. Vorrichtung nach einem der Ansprüche 5 bis 13,
dadurch gekennzeichnet,
daß der Behälter (15) einen dichten Deckel (24) mit Abstand von der Oberfläche (17) des emulsionhaltigen Abwassers im Behälter (15) besitzt, daß vom Behälterhohlraum oberhalb der Oberfläche (17) eine Leitung (25) zu einer Trenneinrichtung (61) für den Schaum führt, in der Feststoffe, Abgas und etwa mitgeführte Restflüssigkeit voneinander trennbar sind.

15. Vorrichtung nach Anspruch 14,
dadurch gekennzeichnet,
daß die Trenneinrichtung eine Zentrifuge (61) ist.

16. Vorrichtung nach Anspruch 14 oder 15,
gekennzeichnet durch
eine Rückführleitung zum Rückführen der Restflüssigkeit zum Eingang der Vorrichtung.

## Claims

1. A process for separating the components of emulsion-containing effluents, such as oil-containing effluents or special waste effluents, in which the effluent containing the emulsion, flowing through a vessel (15, 30) and leaving it at the bottom end, is subjected to agitation-type flotation in which gas is delivered to a mixing device (19) and is expelled by the latter into the effluent containing the emulsion with as fine bubbles as possible, and in which flotated materials form a removable foam on the surface (17) of the emulsion-containing effluent in the vessel (15, 30), and wherein gas bubbles with a diameter of less than 0.1 mm are distributed, characterised by the combination of the following process steps:
   - the effluent containing the emulsion is charged into the vessel (15, 30) near but below the surface (17) of the emulsion-containing effluent,
   - the gas is dispersed in the vessel (15, 30) by means of a rotating mixer (19), in the reaction zone of the mixer, and the gas bubbles thus produced are finely distributed,
   - at the same time the emulsion is broken up mechanically in the reaction zone of the mixer (19) and in the turbulence zone of the vessel (15, 30) due to impact forces,
   - the gas bubbles, loaded with the thus separated-off separation material phase of the emulsion, rise against the flow of the delivered emulsion-containing effluent into a flotation zone lying above the turbulence zone and to the surface (17) and form a foam there,
   - the foam is removed and processed further,
   - the residue of the processed effluent is removed from the bottom end of the vessel (15, 30) and if necessary subjected to this treatment several times until a fluid free of the separation material phase remains.

2. A process according to claim 1, characterised in that the emulsion-containing effluent is subjected to impact and shear forces caused by the rotation of a rotor (43) relative to a star-shaped dispersing element (50) arranged coaxially with the rotor, and the gas is dispersed into the zone of highest shear forces.

3. A process according to claim 1 or claim 2, characterised in that, in a continuous process, the processed residue of the emulsion-containing effluent is removed at the bottom end of the vessel (15, 30) and supplied to a vessel (30) following in the direction of flow, near the surface (17) of the emulsion-containing effluent in this following vessel, wherein the latter can be supplied with, if necessary, a different gas and/or other chemicals.

4. A process according to any one of claims 1 to 3, characterised in that the foam (7) is supplied by means of the gas from the vessel (15, 30), which vessel is closed on all sides, via a line (25) to a separating device (61) and is separated there into exhaust gas and solids contained therein, and residual fluid carried along is guided back to the non-separated effluent.

5. An apparatus for carrying out the process according to any one of claims 1 to 4,
   - having a vessel (15, 30) to which an emulsion-containing effluent to be separated is supplied on the inlet side, and from which the treated residue of the effluent or the fluid free of the separation material phase is removed at the outlet side,
   - having a gasifying arrangement (19) in the vessel (15, 30) comprising a stirring device and a feed line for gas for dispersing fine gas bubbles into the emulsion,
   - and having an arrangement for removing the foam loaded with the flotate from the surface (17) of the emulsion-containing effluent,

wherein the vessel (15) has an inlet (16, 34) for the effluent arranged beneath and near the surface (17) of the emulsion-containing effluent, and an outlet for the residue of the effluent or the fluid arranged at the bottom end of the vessel (15),

wherein the gasifying arrangement (19) has:

- a stator pipe (41)
- a rotor shaft (42) coaxial with the stator pipe (41),
- a rotor (43) at one end of the rotor shaft (42) outside the stator pipe (41),
- a drive (motor 44) at the other end of the rotor shaft (42),
- a feed line (20) for supplying gas into the space (45) between the rotor shaft (42) and the stator pipe (41),
- a hollow, cylindrical stator (49) secured to the stator pipe (41), which surrounds the rotor (43) and the inner end of the stator pipe (41),
- and a dispersing element (50) cooperating with the rotor (43) for acting on the emulsion with shear forces, wherein the dispersing element (50) is star-shaped and arranged beneath the rotor (43) and the lower edges (52) of the rotor blades (48) cooperate with the upper edges (51) of the dispersing element (50) at a small distance from one another.

6. An apparatus according to claim 5, characterised in that the stator (49) is mounted fixedly or displaceably on the stator pipe (41).

7. An apparatus according to claim 5 or 6, characterised in that the dispersing element (50) can be adjusted vertically relative to the stator (49).

8. An apparatus according to any one of claims 5 to 7, characterised in that the inlet is formed by a partition wall (34, 35) extending upwards from the bottom of the vessel (15, 30) and ending near the surface (17, 31) of the emulsion-containing effluent in the vessel (15, 30).

9. An apparatus according to any one of claims 5 to 8, characterised in that arranged in the region of the dispersing element (50) is a flow element causing a radial flow of the effluent-gas mixture that has flowed through the rotor (43) and the dispersing element (50), said flow element comprising a flange-shaped annular part (55) at the dispersing element (50) and a plate (56) at a distance beneath the annular part (55).

10. An apparatus according to claim 9, characterised in that a central axial hole is made in the plate (56).

11. An apparatus according to any one of claims 5 to 10, characterised by a substantially horizontal screen grid (23) in the vessel (15) between the zone in which the gasifying arrangement (19) causes turbulence (gasifying and turbulence zone 21), and the substantially turbulence-free zone, in which flotation occurs (flotation zone 22), above the turbulence zone.

12. An apparatus according to any one of claims 5 to 11, characterised in that the flow of the emulsion-containing effluent passes continuously one after the other through a plurality of vessels (15, 30,...) and the bottom end of one vessel (15) is connected with the region near the surface (31) in the next following vessel (30).

13. An apparatus according to claim 12, characterised in that at least two vessels (15, 30) are arranged in series and the adjoining regions have two, substantially parallel partition walls, one of which extends from the top end to near the bottom end of the first vessel (15), and the other (35) of which extends from the bottom end to near the filling level (31) in the second vessel (30).

14. An apparatus according to any one of claims 5 to 13, characterised in that the vessel (15) has a sealing cover (24) at a distance from the surface (17) of the emulsion-containing effluent in the vessel (15), in that a line (25) from the hollow interior of the vessel above the surface (17) leads to a separating arrangement (61) for the foam, in which solid residue, exhaust gas and residual fluid carried with it can be separated from one another.

15. An apparatus according to claim 14, characterised in that the separating arrangement is a centrifuge (61).

16. An apparatus according to claim 14 or 15, characterised by a return line to return the residual fluid to the inlet of the apparatus.

**Revendications**

1. Procédé de séparation des constituants d'eaux usées contenant de l'émulsion, telles que des eaux usées huileuses ou des eaux usées provenant de rejets de nature particulière, dans lequel l'eau usée contenant de l'émulsion, circulant dans un récipient (15, 30) et sortant de celui-ci par l'extrémité inférieure, est soumise à une flottation avec agitation, dans laquelle du gaz est apporté à un dispositif mélangeur (19) et est injecté, au moyen de ce dernier, en bulles aussi fines que possible, dans l'eau usée contenant de l'émulsion, et dans lequel les substances entraînées par flottation forment une mousse susceptible d'être éliminée à la surface (17) de l'eau usée contenant de l'émulsion dans le récipient (15, 30), le gaz étant divisé en bulles de diamètre inférieur à 0,1 mm,

**caractérisé** par la combinaison des étapes suivantes :

- l'eau usée contenant de l'émulsion est introduite dans le récipient (15, 30), près de la surface (17) de l'eau usée contenant de l'émulsion, mais sous cette surface,
- le gaz est dispersé au moyen d'un mélangeur rotatif (19) dans la zone de réaction de celui-ci dans le récipient (15, 30) et les bulles de gaz ainsi produites sont finement dispersées,
- en même temps, l'émulsion est cassée mécaniquement dans la zone de réaction du mélangeur (19) et dans la zone de turbulence du récipient (15, 30) sous l'effet de forces de percussion,
- les bulles de gaz chargées de la phase ainsi séparée de substances à séparer de l'émulsion montent dans une zone de flottation située au dessus de la zone de turbulence, en contre-courant à la circulation d'introduction de l' eau usée contenant de l'émulsion, en s'élevant jusqu'à la surface (17) où elles forment une mousse,
- la mousse est évacuée et soumise à traitement ultérieur,
- le reste de l'eau usée traitée est soutiré par le fond du récipient (15, 30) et est, le cas échéant, soumis plusieurs fois à ce traitement, jusqu'à ce qu'il subsiste un liquide exempt de phases de substances à séparer.

2. Procédé selon la revendication 1, caractérisé en ce que l'eau usée contenant de l'émulsion est exposée aux forces de percussion et de cisaillement provoquées par la rotation d'un rotor (43) en regard d'un élément disperseur (50) en forme d'étoile, disposé coaxialement à celui-ci, et en ce que du gaz est introduit et dispersé dans la zone des forces de cisaillement les plus grandes.

3. Procédé selon la revendication 1 ou 2, caractérisé en ce que, dans le cas d'un procédé continu, le reste traité de l'eau usée contenant de l'émulsion est prélevé à l'extrémité inférieure du récipient (15, 30) et est conduit à un récipient (30) disposé en aval, près de la surface (17) de l'eau usée contenant de l'émulsion dans ce récipient, tandis que, le cas échéant, un autre gaz et/ou d'autres agents chimiques peuvent y être introduits.

4. Procédé selon une des revendications 1 à 3, caractérisé en ce que la mousse (7) est entraînée au moyen du gaz hors du récipient (15, 30) clos de toute part, par une conduite (25) vers un dispositif séparateur (61) où elle est séparée en un gaz résiduel et en substances solides éventuellement contenues, tandis que le restant de liquide entraîné est ramené dans l'eau usée non encore séparée.

5. Dispositif de mise en oeuvre du procédé selon une des revendications 1 à 4,
- avec un récipient (15, 30) dans lequel est introduite, du côté d'entrée, une eau usée a séparer, contenant de l'émulsion, et hors duquel est prelevé, du côté de sortie, le reste traité de l'eau usée ou le liquide exempt de phases de substances à séparer,
- avec un agitateur et un dispositif d'injection de gaz (19) présentant une conduite d'arrivée de gaz, dans le récipient (15, 30) pour l'injection de fines bulles de gaz dans l'émulsion,
- et avec un dispositif d'évacuation, à partir de la surface (17) de l'eau usée contenant de l'émulsion, de la mousse chargée de la matière flottée,

dans lequel le récipient (15) présente une entrée (16, 34) pour l'eau usée, disposée en dessous et près de la surface (17) de l'eau usée contenant de l'émulsion et une sortie disposée à l'extrémité inférieure du récipient (15) pour le reste de l'eau usée et/ou le liquide,

dans lequel le dispositif d'injection de gaz (19) présente :
- un tube de stator (41),
- un arbre de rotor (42) coaxial au tube de stator (41),
- un rotor (43) à une extrémité de l'arbre de rotor (42), à l'extérieur du tube de stator (41),

- un entraînement (moteur 44) à l'autre extrémité de l'arbre de rotor (42),
- une conduite d'amenée (20) pour l'introduction du gaz dans l'espace (45) entre l'arbre de rotor (42) et le tube de stator (41),
- un stator creux cylindrique (49) fixé au tube de stator (41), entourant le rotor (43) et l'extrémité intérieure du tube de stator (41),
- et un élément disperseur (50) coopérant avec le rotor (43) dans le but de soumettre l'émulsion à des forces de cisaillement, l'élément disperseur (50) ayant une forme en étoile et étant disposé en dessous du rotor (43), tandis que les bords inférieurs (52) des pales (48) du rotor coopèrent avec les bords supérieurs (51) de l'élément disperseur (50), à faible distance les uns des autres.

6. Dispositif selon la revendication 5, caractérisé en ce que le stator (49) est fixé au tube de stator (41) ou est monté coulissant sur celui-ci.

7. Dispositif selon la revendication 5 ou 6, caractérisé en ce que l'élément disperseur (50) est réglable verticalement par rapport au stator (49).

8. Dispositif selon une des revendications 5 à 7, caractérisé en ce que l'entrée est constituée par une cloison (34, 35) s'étendant vers le haut, à partir du fond du récipient (15, 30), qui se termine près de la surface (17, 31) de l'eau usée contenant de l'émulsion dans le récipient (15, 30).

9. Dispositif selon une des revendications 5 à 8, caractérisé en ce que dans la zone de l'élément disperseur (50) est disposé un élément de circulation provoquant une circulation radiale du mélange d'eau usée et de gaz passant entre le rotor (43) et l'élément disperseur (50), cet élément de circulation se composant d'une partie annulaire (55) en forme de flasque dur l'élément disperseur (50) et d'une plaque (56) à une certaine distance en dessous de la partie annulaire (55).

10. Dispositif selon la revendication 9, caractérisé en ce qu'un trou central axial (57) est ménagé dans la plaque (56).

11. Dispositif selon une des revendications 5 à 10, caractérisé par une grille séparatrice (23) sensiblement horizontale dans le récipient (15), entre la zone où le dispositif d'injection de gaz (19) produit une turbulence (zone 21 d'injection de gaz et de turbulence), et le zone se trouvant au dessus de celle-ci, essentiellement exempte de turbulence, dans laquelle a lieu la flottation (zone de flottation 22).

12. Dispositif selon une des revendications 5 à 11, caractérisé en ce que le courant d'eau usée contenant de l'émulsion parcourt, en continu, plusieurs récipients (15, 30, ...) à la suite l'un de l'autre, l'extrémité inférieure d'un récipient (15) étant reliée à la zone située près de la surface (31) dans le récipient suivant (30).

13. Dispositif selon la revendication 12, caractérisé en ce que les récipients (15, 30) étant au moins au nombre de deux sont juxtaposés et que leurs zones contigües présentent deux cloisons de séparation sensiblement parallèles dont l'une s'étend de l'extrémité supérieure jusqu'au voisinage de l'extrémité inférieure du premier récipient (15) tandis que l'autre (35) s'étend de l'extrémité inférieure jusqu'au voisinage du niveau de remplissage (31) dans le deuxième récipient (30).

14. Dispositif selon une des revendications 5 à 13, caractérisé en ce que le récipient (15) a un couvercle étanche (24) à distance de la surface (17) de l'eau usée contenant de l'émulsion dans le récipient (15) et en ce qu'une conduite (25) va de l'espace creux du récipient au dessus de la surface (17) jusqu'à un dispositif (61) séparateur de mousse, dans lequel peuvent être séparés les uns des autres les solides, le gaz résiduel et le liquide restant, éventuellement entraîné avec ceux-ci.

15. Dispositif selon la revendication 14, caractérisé en ce que le dispositif séparateur est une centrifugeuse (61).

16. Dispositif selon la revendication 14 ou 15, caractérisé par une conduite de recyclage pour le recyclage du liquide résiduel à l'entrée du dispositif.

Gas

Chemikalien

**Konditionieren** 3

**Flotation** 4

**Flotat** 7

**Reinwasser** 5

**Kläranlage** 6

**Trennen** 8

**Rest- wasser** 11

**Abgas** 10

**Atmosph.**

**Feststoff** 9

**Aktivkohle- filter** 13

**Verbrennung Sondermüll Verfütterung Faulturm etc.** 12

FIG.1

14

FIG. 2

FIG. 3

FIG. 4

16

FIG.5